(19) Europäisches Patentamt
European Patent Office
Office européen des brevets

(11) **EP 2 906 837 B1**

## (12) EUROPÄISCHE PATENTSCHRIFT

(45) Veröffentlichungstag und Bekanntmachung des Hinweises auf die Patenterteilung:
**14.09.2016 Patentblatt 2016/37**

(21) Anmeldenummer: **12821254.5**

(22) Anmeldetag: **19.12.2012**

(51) Int Cl.:
***F16B 25/00*** *(2006.01)*

(86) Internationale Anmeldenummer:
**PCT/DE2012/200085**

(87) Internationale Veröffentlichungsnummer:
**WO 2013/102453 (11.07.2013 Gazette 2013/28)**

(54) **SELBSTFURCHENDE SCHRAUBE**

SELF-TAPPING SCREW

VIS AUTO-TARAUDEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.01.2012 DE 202012000045 U**

(43) Veröffentlichungstag der Anmeldung:
**19.08.2015 Patentblatt 2015/34**

(73) Patentinhaber: **Ruia Global Fasteners AG
41462 Neuss (DE)**

(72) Erfinder: **MÜLLER, Kurt
56727 Mayen (DE)**

(74) Vertreter: **Weickmann & Weickmann PartmbB
Postfach 860 820
81635 München (DE)**

(56) Entgegenhaltungen:
**EP-A2- 2 292 939     US-A- 2 352 982
US-A- 3 772 720**

**Beschreibung**

Die vorliegende Erfindung betrifft eine selbstfurchende Schraube mit einem Kopf und einem Außengewindeträger.

Selbstfurchende Schrauben sind schon seit langem bekannt. Dabei tritt jedoch das Problem auf, dass insbesondere bei der Montage selbstfurchender Schrauben in Kunststoffe aufgrund der hohen Reibung zwischen dem Schraubenmaterial und dem Kunststoff erhebliche Einschraubkräfte erforderlich sind. Dadurch wird die Montage mühsam.

Der hierzu nächstgelegene Stand der Technik ergibt sich aus der EP 2 292 939 A2. Diese zeigt bereits eine selbstfurchende Schraube mit einem Kopf und einem Außengewindeträger, bei der der Kernquerschnitt des Außengewindeträgers die Form eines abgerundeten N-Ecks aufweist.

Hiervon ausgehend ist es Aufgabe der vorliegenden Erfindung, eine solche selbstfurchende Schraube dahingehend weiterzuentwickeln, dass die Montage einfacher wird.

Erfindungsgemäß wird diese Aufgabe durch eine selbstfurchende Schraube gemäß Anspruch 1 gelöst. Durch diese Konstruktion können die Bauteilspannungen (Druckeigenspannungen), die während des Einschraubvorganges entstehen, durch den Freiraum (Hinterschnitt), der durch die Polygonform gebildet wird, abgebaut werden. Weiter ergibt sich dadurch eine zusätzliche Montageerleichterung in Folge der besseren Selbstzentrierung während des Einschraubvorganges.

Eine vorteilhafte Weiterbildung der vorliegenden Erfindung ergibt sich aus den Merkmalen des Unteranspruches.

Die vorliegende Erfindung wird im Folgenden anhand des in den anliegenden Zeichnungen beschriebenen Ausführungsbeispieles näher erläutert. Es zeigt:

Fig. 1 eine erfindungsgemäße selbstfurchende Schraube von der Seite;

Fig. 2 eine vergrößerte Darstellung eines Teiles des Außengewindeträgers der erfindungsgemäßen Schraube der Fig. 1;

Fig. 3 die Einzelheit "Z" der Fig. 2,

Fig. 4 ein Beispiel für den pentalobularen Kernquerschnitt des Außengewindeträgers einer erfindungsgemäßen Schraube;

Fig. 5 die geometrische Konstruktion, die zu dem Querschnitt der Fig. 4 führt;

Fig. 6 die geometrischen Hilfsüberlegungen, die zu der Konstruktion der Fig. 5 führen;

Fig. 7 weitere Erläuterungen zu der geometrischen Konstruktion der erfindungsgemäßen pentalobularen Kernquerschnitte des Außengewindeträgers;

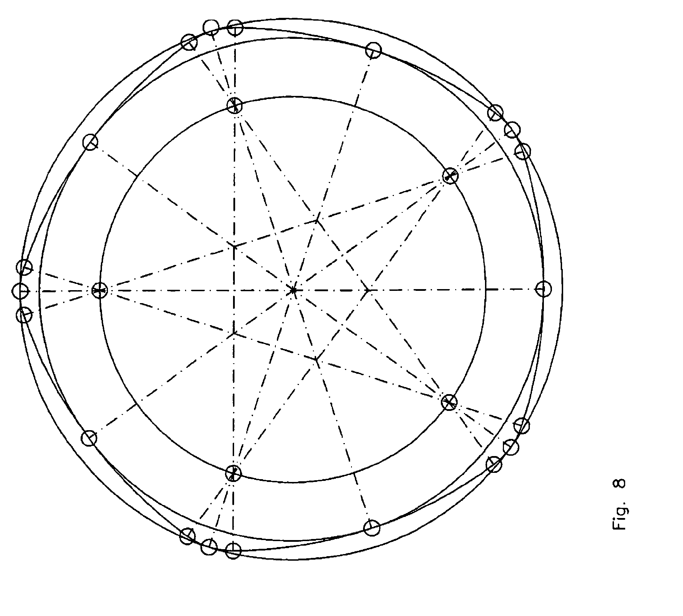

Fig. 8 einen anderen erfindungsgemäßen Kernquerschnitt für einen Außengewindeträger mit einem größeren k-Wert;

Fig. 9 ein Kräfteparallelogramm an dem erfindungsgemäßen Gewindeprofil;

Fig. 10 das Zusammenwirken der entsprechenden Kräfte der Fig. 9 auf einander folgenden Gewindeprofilen;

Fig. 11 die entsprechenden Kräfte im Werkstück, in das eine erfindungsgemäße Schraube geschraubt ist; und

Fig. 12 einen erfindungsgemäßen Kernquerschnitt mit einer höheren Eckzahl, nämlich einen heptalobularen Querschnitt samt der hierfür erforderlichen geometrischen Konstruktionen.

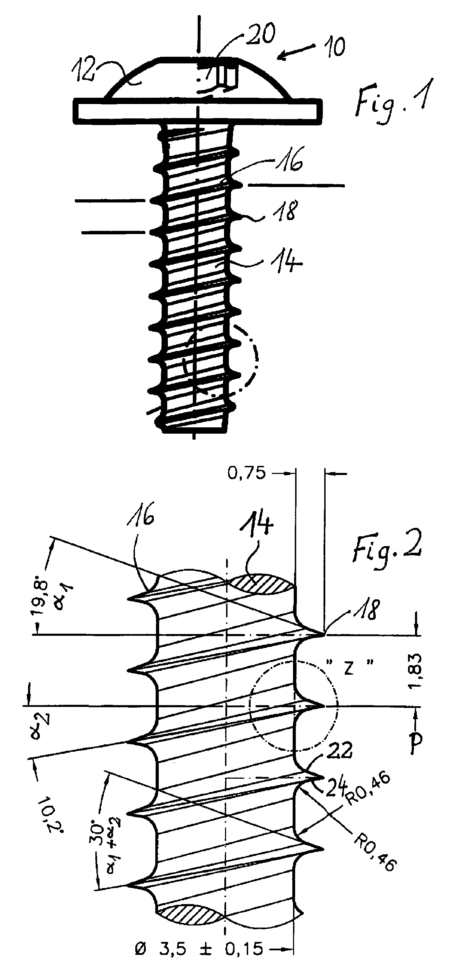

Figur 1 zeigt eine erfindungsgemäße selbstfurchende Schraube 10 mit einem Kopf 12 und einem Außengewindeträger 14. Der Außengewindeträger 14 weist hier ein selbstfurchendes Gewinde 16 auf, dieses besteht aus einem Gewindegang 18, dessen detaillierte Gestaltung in Figur 2 näher erläutert ist.

Der Kopf 12 der Schraube 10 ist mit einem Innenkraftangriff 20 versehen, hier handelt es sich um einen hexalobularen Innenkraftangriff. Selbstverständlich können erfindungsgemäße Schrauben mit beliebigen anderen Innen- oder Außenkraftangriffen gefertigt werden.

Die Gestaltung des Außengewindes 16 im Einzelnen ist anhand der Fig. 2 besser erkennbar. Der Gewindegang 18 geht hier über einen Radius abgerundet aus dem Grundkörper oder Kern des Außengewindeträgers 14 hervor und weist einen Schnittwinkel seiner beiden Flanken 22, 24 von 30° auf. Dieser Wert hat sich als für selbstfurchende Schrauben optimaler Erfahrungswert herauskristallisiert.

Erfindungsgemäß ist der Gewindegang 18 jedoch nicht symmetrisch. Vielmehr weisen seine beiden Flanken 22, 24 jeweils unterschiedliche Winkel zur Senkrechten auf der Rotationsachse des Außengewindeträgers 14 auf. Hierbei weist die dem Schraubenkopf zugewandte Flanke 22 einen Winkel von etwa 20° auf, während die vom Schraubenkopf 12 abgewandte Flanke 24 lediglich einen Winkel von etwa 10° aufweist.

Das Gewindeprofil des Außengewindes 16 ist hier also asymmetrisch aufgebaut. Besonders bevorzugt ist es dabei, wenn der Flankenwinkel so aufgeteilt ist, dass sich der Tangenswert halbiert. Damit ergibt sich optimalerweise:

$$\tan \alpha_1 = 0{,}3600 \rightarrow \text{arc} \tan \alpha_1 = 19{,}799$$

$$\tan \alpha_2 = 0{,}1800 \rightarrow \text{arc} \tan \alpha_2 = 10{,}201$$

Die Gewindeprofilhöhe wird über die Festigkeitskennwerte von Schraube und Bauteil bestimmt, damit eine ausreichende Sicherung gegen Abstreifen besteht.

Durch diese Wahl der Flankenwinkel $\alpha_1$ und $\alpha_2$ verändern sich die Reibbeiwerte auf den Flankenhälften ebenfalls um diesen Betrag zwischen der unbelasteten und der belasteten Gewindeflanke. Bei genauer Berechnung ergeben sich die in Figur 2 dargestellten Flankenwinkelseitenanteile von

$$\alpha_1 = 19{,}799\,° \approx 19{,}8°$$

$$\alpha_2 = 10{,}201\,° \approx 10{,}2\,°$$

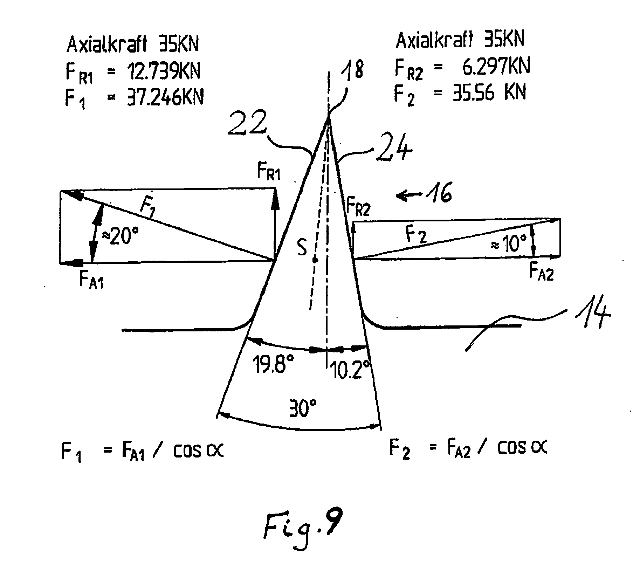

Diese Veränderung des Tangenswertes um 50 % bewirkt eine Änderung des Gewindereibbeiwertes auf den Flankenhälften, und damit eine Veränderung der Radial- und Hauptkräfte, wie in Fig. 9 anhand von Kräfteparallelogrammen dargestellt.

Die Verschiebung der größeren Radialkraft zur belasteten Flankenseite hin bringt Vorteile für den Flankenreibbeiwert und die Selbsthemmung.

Die Zerlegung der Axialkraft in der Schraube wirkt als Zuglast auf der belasteten Flankenseite und als Drucklast auf der unbelasteten Flankenseite durch das Bauteil. Drucklast des Bauteils und Zuglast der Schraube halten die Schraubverbindung im Gleichgewicht. Daraus ergeben sich folgende Radialkräfte:

$$F_{R1} = \tan \alpha_1 * F_A$$

$$F_{R2} = \tan \alpha_2 * F_A$$

und damit die resultierenden Hauptkräfte:

$$F1 = F_A / \cos \alpha_1$$

$$F2 = F_A / \cos \alpha_2$$

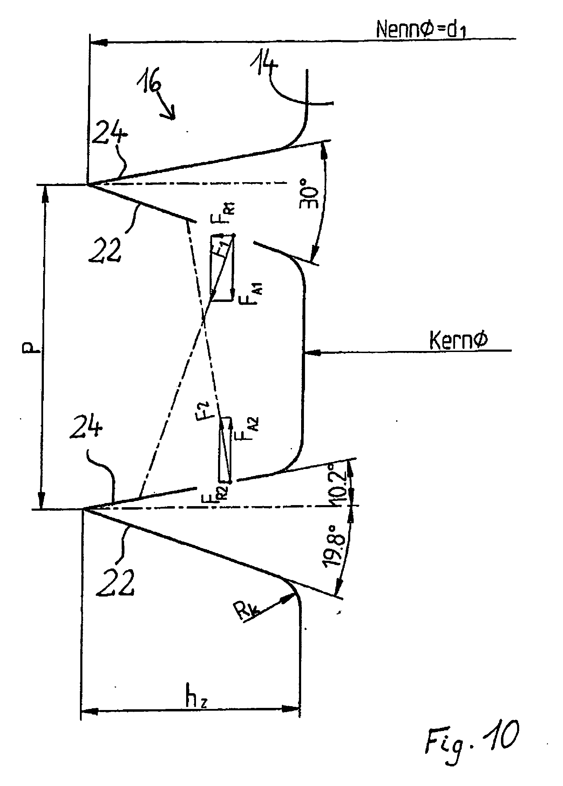

Diese resultierenden Hauptkräfte stehen senkrecht auf den Gewindeflanken. Die veränderten Hauptkräfte geben der Verbindung einen optimalen Halt gegen Abscherung des Innengewindes und ein günstiges Überdrehmoment der Schraube. Dies bewirkt die erfindungsgemäße Flankengeometrie, da die Hauptkräfte ($F_2$ und $F_1$) nicht vom Bauteil, sondern von der benachbarten Gewindeflanke aufgenommen werden, wie in Fig. 10 dargestellt.

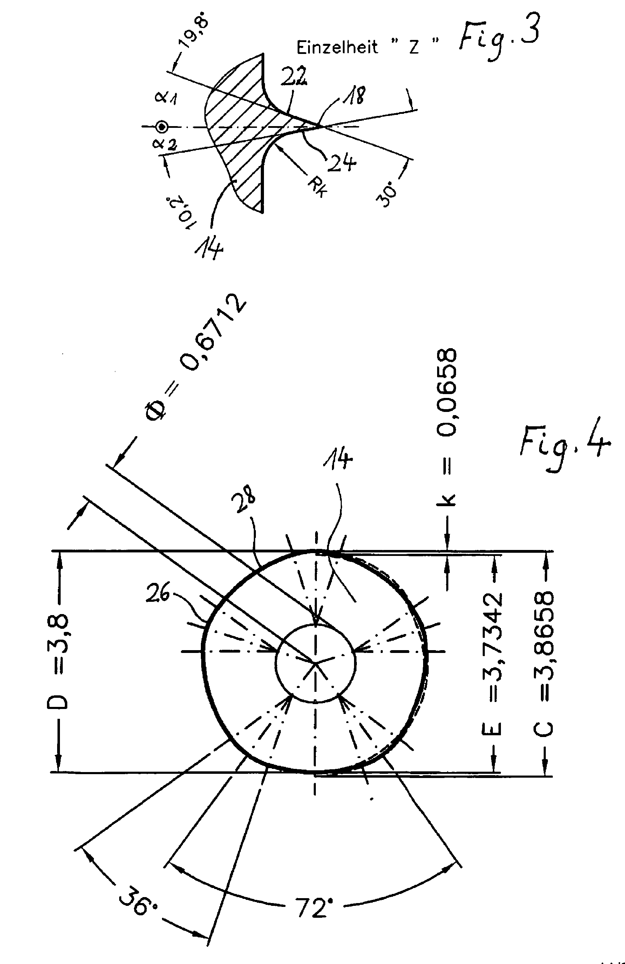

Figur 3 zeigt diesbezüglich die Einzelheit "Z" der Figur 2, aus der die Form des Gewindeprofils noch detaillierter erkennbar ist.

Da die Tangenswerte der Hälften auch die Reibungsfaktoren auf den Flankenseiten 22, 24 sind, ist die Reibung der belasteten Flankenseite 22 doppelt so groß wie die Reibung der unbelasteten Flankenseite 24. Die Selbsthemmung wird von dem Reibungsfaktor der belasteten Flankenseite 22 bestimmt. Dies verhindert ein selbsttätiges Lösen durch Vibration. Durch diese erfindungsgemäße Konstruktion bleiben die Vorspannkräfte in der Verbindung erhalten.

Um den Materialfluss des zu furchenden Gewindes kontrolliert zu formen, ist der Gewindegrund mit einem steigungsabhängigen Radius $R_k$ ausgebildet. Dieser läuft tangential von der Flankengeometrie zum Gewindegrund hin aus. Dadurch ergeben sich keine zusätzlichen Kerbwirkungen im Kernquerschnitt, die eine Minderung des Schraubenquerschnittes unter Zugbelastung bewirken könnten. Schließlich ergeben sich erfindungsgemäß unterschiedliche Optimumswerte für die Steigungen und Spannungsquerschnitte abhängig von dem Werkstoff, in den die erfindungsgemäße selbstfurchende Schraube 10 gesetzt werden soll.

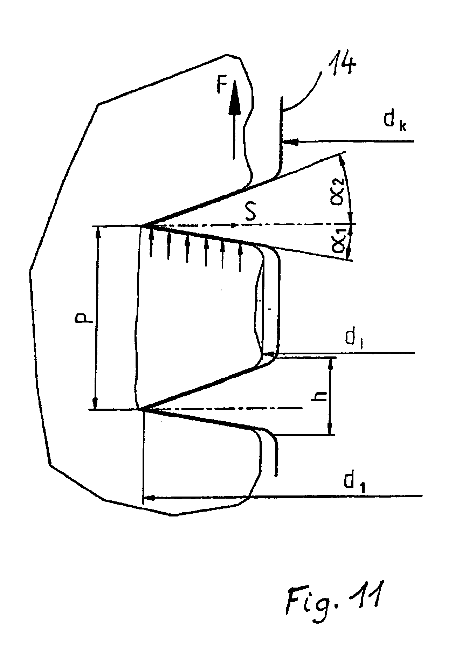

Für höherfeste Kunststoffe (z. B. Duroplaste) und Druckgusslegierungen werden kleinere Steigerungen und größere Spannungsquerschnitte gegenüber den Thermoplasten benötigt, damit die Schraubenverbindung den technischen Anforderungen optimal gewachsen ist. Steigungen und Kerndurchmesser sind Funktionen vom Außendurchmesser und den Festigkeitswerten von Bauteil und Schraube. Für die mathematische Geometrieauslegung gemäß Fig. 11 werden folgende Festigkeitsgrundlagen benötigt:

Schubquerschnitt des Kunststoffes:

$$A_{Schub} = d_l * \pi * P$$

Dabei ist P die Steigung eines Gewindeganges und $d_l$ der Innendurchmesser des Loches, in den die selbstfurchende Schraube gesetzt werden soll.

Der Spannungsquerschnitt der Schraube ergibt sich zu

$$A_S = d_k{}^2 * \pi / 4$$

Wobei $d_k$ der Kerndurchmesser der Schraube 10 ist.

Das Widerstandsmoment des abstreifenden Kunststoffes ergibt sich zu.

$$W_K = (d_1{}^4 - d_l{}^4) / (10 * d_1)$$

Wobei $d_l$ der Innendurchmesser des Loches ist, in das die Schraube gesetzt werden soll.

Das Widerstandsmoment des Gewindezahngrundes ergibt sich dabei zu:

$$W_Z = h^2 * d_k * \pi$$

Wobei h die Höhe des Gewindeprofils, also die Differenz zwischen dem Radius des Kerns des Außengewindes und dem Außenradius des Außengewindes ist.

Für die Schraubenfestigkeit ergibt sich dann

$$R_m = F_S / A_S * \pi$$

Und für das Drehmoment (Anzugsmoment) ergibt sich:

$$M_A = F_A * (d_S / 2).$$

Figur 4 zeigt eine Schnittdarstellung eines erfindungsgemäßen pentalobularen Kerns eines Außengewindes 14 einer erfindungsgemäßen Schraube 10. Hierbei wird bereits erkennbar, dass dieser Querschnitt die Form eines stark abgerundeten 5-Ecks aufweist.

Diese Form wird dadurch erzeugt, dass sich Bereiche 26 mit kleinem Radius k und Bereiche 28 mit großem Radius R stets abwechseln und die Außenkontur des Kernquerschnittes an den Übergangsstellen zwischen den Bereichen 26 mit kleinem Radius r und den Bereichen 28 mit großem Radius R tangential ineinander übergehen.

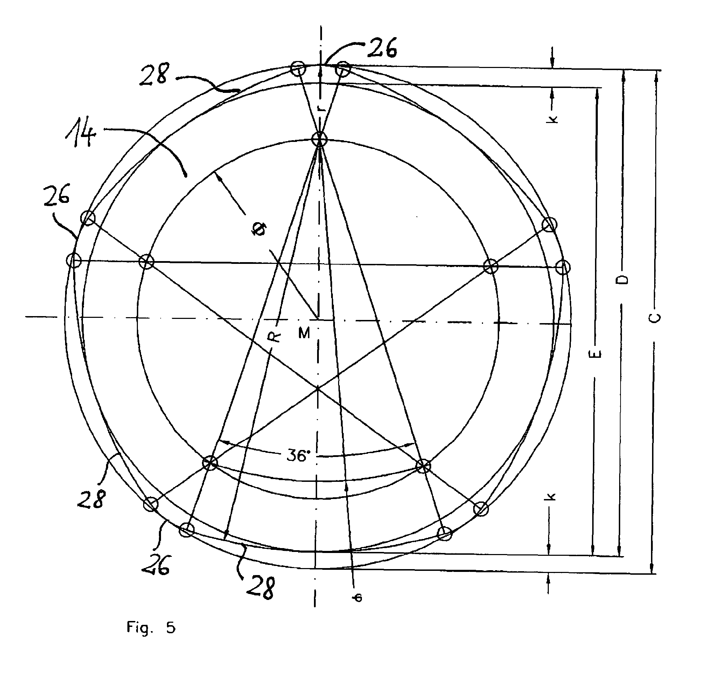

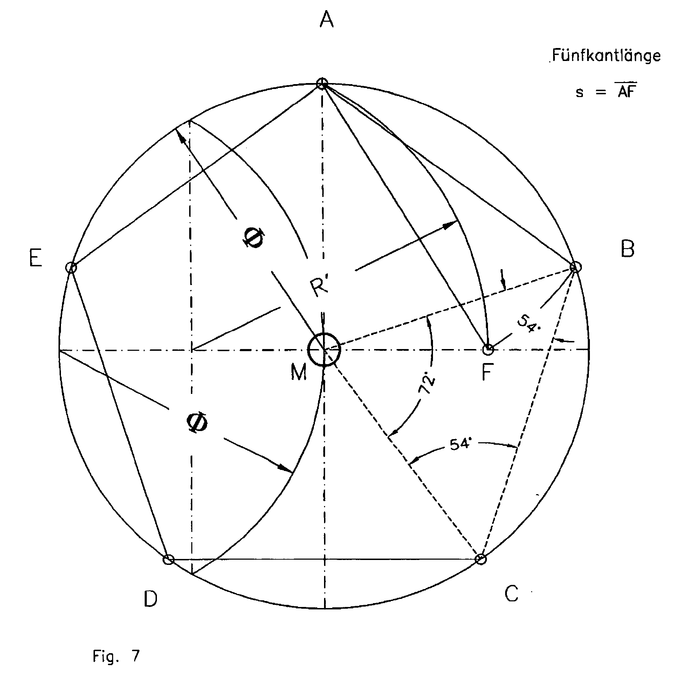

Die Konstruktion der Außenkontur des Querschnittes des Kerns des Außengewindes der erfindungsgemäßen selbstfurchenden Schraube wird im Folgenden anhand der Figuren 5 bis 7 noch detaillierter erörtert, wobei gleiche Buchstaben gleiche Strecken in der geometrischen Darstellung bedeuten.

Figur 5 zeigt die entsprechende geometrische Konstruktion noch wesentlich deutlicher.

Für die Konstruktion eines entsprechenden pentalobularen Querschnittes wird um den Durchtrittspunkt M der Rotationsachse des Außengewindes durch die Schnittfläche ein Kreis mit einem Radius $\phi$ gezogen. Auf diesem Kreis werden fünf äquidistante Punkte 30 bestimmt, diese weisen also vom Mittelpunkt M gesehen jeweils einen Abstand von 72 Winkelgrad auf. Von diesen Punkten 30 aus werden kleine Radien r auf der vom Mittelpunkt M abgelegenen Seite der Punkte 30 gezogen und Radien mit einem großen Radius R auf der von dem jeweiligen Punkt 30 aus gesehen jenseits des Mittelpunktes M gelegenen Seite.

Es gelten dabei folgende Größenverhältnisse für die Radien R und r:

Zur Berechnung dieser Radien müssen zuerst die anderen Größen in Figur 5 bestimmt werden. Ausgegangen wird hierbei von dem durch die Norm vorgegebenen mittleren Kerndurchmesser D. Dieser bildet die Summe aus großem Radius R und kleinem Radius r. Es gilt also

$$D = R + r.$$

Weiter existiert ein maximaler Außendurchmesser des rotierenden Querschnittes, der hier mit C bezeichnet wird.

Die Differenz zwischen D und C ist der Wert k, dieser gibt die "Unrundheit" des jeweiligen pentalobulären Querschnittes an. Es gilt also

$$C - D = k.$$

Damit ergibt sich folgende weitere Herleitung für die erforderlichen Größen:

$$R = r + \varphi$$

$$\varphi = R - r$$

$$\frac{\varphi}{\sin 72°} = \frac{s}{\sin 36°} \rightarrow \varphi = \frac{s \cdot \sin 72°}{\sin 36°}$$

$$s = \Phi * \frac{\sin 72°}{\sin 54°}$$

$$\varphi = \frac{\phi \cdot \frac{\sin 72°}{\sin 54°} \cdot \sin 72°}{\sin 36°} = \phi \cdot \frac{\sin^2 72°}{\sin 54° \cdot \sin 36°}$$

$$R = r + \phi \cdot \frac{\sin^2 72°}{\sin 54° \cdot \sin 36°}$$

$$r = R - \phi \cdot \frac{\sin^2 72°}{\sin 54° \cdot \sin 36°}$$

$$r = C - R - k$$

$$r = r$$

$$C - R - k = R - \phi \cdot \frac{\sin^2 72°}{\sin 54° \cdot \sin 36°}$$

$$C - k + \phi \cdot \frac{\sin^2 72°}{\sin 54° \cdot \sin 36°} = 2R$$

$$(C - k + \phi \cdot \frac{\sin^2 72°}{\sin 54° \cdot \sin 36°}) \cdot \frac{1}{2} = R$$

$$\boxed{R = \frac{1}{2}C + (\phi \cdot \frac{\sin^2 72°}{2 \cdot \sin 54° \cdot \sin 36°} - \frac{1}{2}k)}$$

$$R = R$$

$$C - r - k = r + \phi \frac{\sin^2 72°}{\sin 54° \cdot \sin 36°}$$

$$2r = C - \phi \frac{\sin^2 72°}{\sin 54° \cdot \sin 36°} - k$$

$$r = (C - \phi \frac{\sin^2 72°}{\sin 54° \cdot \sin 36°} - k) \cdot \frac{1}{2}$$

$$\boxed{r = \frac{1}{2}C - (\phi \frac{\sin^2 72°}{2 \cdot \sin 54° \cdot \sin 36°} + \frac{1}{2}k)}$$

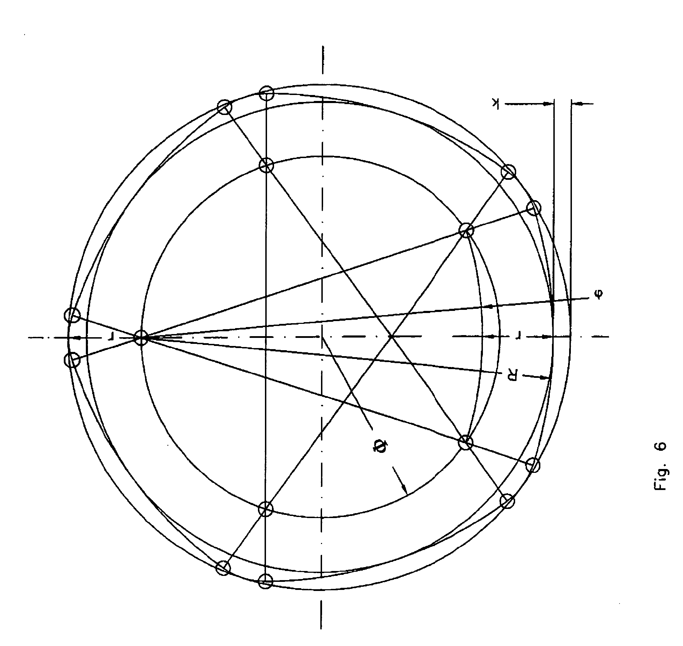

Schließlich ist noch der Innenkreisradius $\phi$ aus den vorgegebenen Größen zu bestimmen, wie dies im Folgenden an Hand der Darstellung der beigefügten Figur 6 erfolgt.

$$R = 2\phi + r - k \rightarrow R - r = 2\phi - k$$

$$R = r + \phi \cdot \frac{\sin^2 72°}{\sin 54° \cdot \sin 36°} \rightarrow R - r = \phi \cdot \frac{\sin^2 72°}{\sin 54° \cdot \sin 36°}$$

$$R - r = R - r$$

$$2\phi - k = \phi \cdot \frac{\sin^2 72°}{\sin 54° \cdot \sin 36°}$$

$$\phi = \frac{k}{2 - \dfrac{\sin^2 72°}{\sin 54° \cdot \sin 36°}}$$

Im Folgenden sollen zur Darstellung einer besonders bevorzugten Ausführungsform der Erfindung bevorzugte Gewindemaße für die verschiedenen Werkstoffklassen Polymerkunststoffe, Thermoplaste, Duroplaste und Leichtmetalle angegeben werden. Hierfür werden folgende allgemein gültige Funktionen vorausgesetzt:

Allgemeingültige Funktionen:

Gewindetoleranzen:

$$\text{Nenn}\varnothing = d = D \text{ nach} \pm \tfrac{1}{2} \text{ IT } 13;$$

$$\text{Kern}\varnothing = d_k \text{ nach} \pm \tfrac{1}{2} \text{ IT } 14;$$

Basis für d = D -> Pentalobular

Gewindeabstand (Unterkopf) a = 2P max
Gewindespitzenverrundung $r_s$ = 0,03P max

$$\text{Gewindeauslauf z} = 2P \text{ max} = 0,5 (dv - 0,05)) * (1/\tan 13°)$$

Kupp$\varnothing$ dz = dk - 0,05

Für die einzelnen Werkstoffe ergeben sich dabei also folgende Werte, jeweils ausgehend vom Nenndurchmesser d als Variable:

Polymerkunststoffe
SP-Gewindeform

$$\text{Nenn}\varnothing \quad d \quad = \text{Nenn}\varnothing \quad (\text{mm})$$

$$\text{Kern}\varnothing \quad d_k \quad = 0,51d + 0,10 \quad (\text{mm})$$

$$\text{Steigung} \quad P \quad = 0{,}45d - 0{,}01 \quad (\text{mm})$$

$$\text{Zahnhöhe} \quad hz \quad = 0{,}5(d-d_k) \quad (\text{mm})$$

$$\text{Kernradius} \quad Rk \quad = 0{,}15P \quad (\text{mm})$$

$$\text{Unrundheit} \quad k \quad = 0{,}04P \quad (\text{mm})$$

Beispielhaft ergibt sich hier für einen Nenndurchmesser von 5,0 ein Wert für die Steigung P mit 2,24 mm, ein Wert für den Kerndurchmesser $d_k$ von 2,65 mm und eine bevorzugte Unrundheit des pentalobularen Querschnittes k von 0,090 mm.

Nunmehr ist noch der Walzdurchmesser $d_v$ für diese Werte bei einem Flankenwinkel $\alpha$ von 30° zu bestimmen, Dieser ergibt sich damit zu minimal 3,113 mm, als bevorzugter Wert ergibt sich somit aufgrund der Reserve von 0,05 mm für die Längung des Gewindes 3,163 mm. Das Polygonprofil ergibt sich für eine bevorzugte pentalobulare Form abgeleitet aus dem Walzdurchmesservorschlag von dv $\approx$ 3,16 mm = D für die oben beschriebenen Parameter der geometrischen Konstruktion des Außenumrisses des pentalobularen Querschnittes:

C $\approx$ 3,25 mm
D $\approx$ 3,16 mm
E $\approx$ 3,07 mm
R = 2,4519 mm
r = 0,7108 mm
$\phi$ = 0,9153mm und

die Querschnittsfläche des Polygon - Walzquerschnittes A ergibt sich zu 7,86 mm$^2$.

Im Folgenden werden tabellarisch die Hauptwerte (Nenndurchmesser d, Steigung P, Kerndurchmesser $d_k$ und Unrundheitswert k) zur Bestimmung des pentalobularen Außenumrisses des Polygon - Walzquerschnittes k wie folgt angegeben:

SP-Gewindeauslegung (Alle Maße in mm)

| d | 3,0 | 4,0 | 5,0 |
|-------|-------|-------|-------|
| P | 1,34 | 1,79 | 2,24 |
| $d_k$ | 1,63 | 2,14 | 2,65 |
| k | 0,054 | 0,072 | 0,090 |

| d | 6,0 | 7,0 | 8,0 |
|-------|-------|-------|-------|
| P | 2,69 | 3,140 | 3,59 |
| $d_k$ | 3,16 | 3,670 | 4,18 |
| k | 0,108 | 0,126 | 0,144 |

Für Thermoplaste ergibt sich folgende Berechnung für die bevorzugten Gewindekenngrößen:

Thermoplaste

TP - Gewindeform

$$\text{Nenn} \varnothing \qquad d \qquad = \text{Nenn} \varnothing \qquad (\text{mm})$$

$$\text{Kern} \varnothing \qquad d_k \qquad = 0{,}72d\text{-}0{,}10 \qquad (\text{mm})$$

$$\text{Steigung} \qquad P \qquad = 0{,}34d\text{+}0{,}125 \qquad (\text{mm})$$

$$\text{Zahnhöhe} \qquad hz \qquad = 0{,}5(d\text{-}d_k) \qquad (\text{mm})$$

$$\text{Kernradius} \qquad Rk \qquad = 0{,}25P \qquad (\text{mm})$$

$$\text{Unrundheit} \qquad k \qquad = 0{,}04P \qquad (\text{mm})$$

Beispielhaft ergibt sich hier wieder für einen Nenngewindedurchmesser von 5,0 mm die Steigung P zu 1,83 mm, der Kerndurchmesser $d_k$ zu 3,50 mm und die Unrundheit des pentalobularen Querschnittes zu k = 0,073 mm, für den Walzdurchmesser $d_v$ ergibt sich bei einem bevorzugten Flankenwinkel $\alpha$ von 30° 3,745 mm, mit einer Reserve von 0,05 mm für die Längung des Gewindes ergibt sich ein Walzdurchmesser von 3,80 mm. Die einzelnen Kenngrößen des pentalobularen Walzquerschnittes ergeben sich dann zu:

C ≈ 3,87 mm
k = 0,073 mm
D ≈ 3,80 mm
E ≈ 3,73 mm
R = 2,6093 mm
r = 1,1908 mm und
$\phi$ = 0,7458 mm.

Die Fläche A des Polygon - Walzquerschnittes ergibt sich damit zu 11,34 mm$^2$.

Die Hauptkenngrößen für andere Nenndurchmesser d für Spezialschrauben für Thermoplaste ergeben sich dann gemäß der folgenden Tabelle, wobei d wieder der Nenndurchmesser ist, P die Gewindesteigung, $d_k$ der Kerndurchmesser und k die Unrundheit des pentalobularen Querschnittes.

TP-Gewindeauslegung (Alle Maße in mm)

| d | 2,5 | 3,0 | 3,5 | 4,0 | 4,5 |
|---|---|---|---|---|---|
| P | 0,98 | 1,15 | 1,32 | 1,49 | 1,66 |
| $d_k$ | 1,70 | 2,06 | 2,42 | 2,78 | 3,14 |
| k | 0,039 | 0,046 | 0,053 | 0,059 | 0,066 |
| d | 5,0 | 6,0 | 7,0 | 8,0 | 10,0 |
| P | 1,83 | 2,17 | 2,51 | 2,85 | 3,53 |
| $d_k$ | 3,50 | 4,22 | 4,94 | 5,66 | 7,10 |
| k | 0,073 | 0,087 | 0,100 | 0,114 | 0,141 |

Für Duroplaste ergibt sich folgende Berechnung für die bevorzugten Gewindekenngrößen:

Duroplaste

DP- Gewindeform

Nennø d = Nennø (mm)
Kernø $d_k$ = 0,75d-0,04 (mm)
Steigung P = 0,19d+0,28 (mm)
Zahnhöhe hz = 0,5(d-$d_k$) (mm)
Kernradius Rk = 0,2P (mm)
Unrundheit k = 0,04P (mm)

Beispielhaft ergibt sich hier wieder für einen Nenngewindedurchmesser von 5,0 mm die Steigung P zu 1,23 mm, der Kerndurchmesser $d_k$ zu 3,71 mm und die Unrundheit des pentalobularen Querschnittes zu k = 0,049 mm, für den Walzdurchmesser $d_v$ ergibt sich bei einem bevorzugten Flankenwinkel $\alpha$ von 30° 3,964 mm, mit einer Reserve von 0,05 mm für die Längung des Gewindes ergibt sich ein Walzdurchmesser von 4,01 mm. Die einzelnen Kenngrößen des pentalobularen Walzquerschnittes ergeben sich dann zu:

C ≈ 4,06 mm
k = 0,049 mm
D ≈ 4,01 mm
E ≈ 3,96 mm
R = 2,4850 mm
r = 1,5290 mm und
$\phi$ = 0,5026 mm.

Die Fläche A des Polygon - Walzquerschnittes ergibt sich damit zu 12,65 mm$^2$.
Die Hauptkenngrößen für andere Nenndurchmesser d für Spezialschrauben für Duroplaste ergeben sich dann gemäß der folgenden Tabelle, wobei d wieder der Nenndurchmesser ist, P die Gewindesteigung, $d_k$ der Kerndurchmesser und k die Unrundheit des pentalobularen Querschnittes.

DP-Gewindeauslegung (Alle Maße in mm)

| d | 2,5 | 3,0 | 3,5 | 4,0 | 4,5 |
|---|---|---|---|---|---|
| P | 0,76 | 0,85 | 0,95 | 1,04 | 1,14 |
| $d_k$ | 1,84 | 2,21 | 2,59 | 2,96 | 3,34 |
| k | 0,030 | 0,034 | 0,038 | 0,042 | 0,045 |
| d | 5,0 | 6,0 | 7,0 | 8,0 | 10,0 |
| P | 1,230 | 1,42 | 1,61 | 1,800 | 2,18 |
| $d_k$ | 3,710 | 4,46 | 5,21 | 5,960 | 7,46 |
| k | 0,049 | 0,057 | 0,064 | 0,072 | 0.087 |

Für Leichtmetalle ergibt sich folgende Berechnung für die bevorzugten Gewindekenngrößen:

Leichtmetalle

LM-Gewindeform

Nennø d = Nennø (mm)
Kernø $d_k$ = 0,785d-0,11 (mm)
Steigung P = 0,20d+0,30 (mm)
Zahnhöhe hz = 0,5(d-$d_k$) (mm)

Kernradius Rk = 0,2P (mm)

Unrundheit k = 0,04P (mm)

Beispielhaft ergibt sich hier wieder für einen Nenngewindedurchmesser von 5,0 mm die Steigung P zu 1,30 mm, der Kerndurchmesser $d_k$ zu 3,82 mm und die Unrundheit des pentalobularen Querschnittes zu k = 0,052 mm, für den Walzdurchmesser $d_v$ ergibt sich bei einem bevorzugten Flankenwinkel $\alpha$ von 30° 4,027 mm, mit einer Reserve von 0,05 mm für die Längung des Gewindes ergibt sich ein Walzdurchmesser von 4,077 mm. Die einzelnen Kenngrößen des pentalobularen Walzquerschnittes ergeben sich dann zu:

C ≈ 4,13mm

k = 0,052 mm

D ≈ 4,08 mm

E ≈ 4,03 mm

R = 2,5436 mm

r = 1,5331 mm und

$\phi$ = 0,5312 mm.

Die Fläche A des Polygon - Walzquerschnittes ergibt sich damit zu 13,05 mm².

Die Hauptkenngrößen für andere Nenndurchmesser d für Spezialschrauben für Leichtmetalle ergeben sich dann gemäß der folgenden Tabelle, wobei d wieder der Nenndurchmesser ist, P die Gewindesteigung, $d_k$ der Kerndurchmesser und k die Unrundheit des pentalobularen Querschnittes.

LM-Gewindeauslegung (Alle Maße in mm)

| d | 3,0 | 4,0 | 5,0 | 6,0 | 8,0 | 10,0 |
|---|---|---|---|---|---|---|
| P | 0,90 | 1,10 | 1,30 | 1,50 | 1,90 | 2,30 |
| $d_k$ | 2,25 | 3.02 | 3,82 | 4,60 | 6,17 | 7,74 |
| k | 0,036 | 0,044 | 0,052 | 0,060 | 0,078 | 0,092 |

Weitere Produkte mit diesem pentalobularen Querschnitt sind Produkte mit Gewindeformen, die ihr eigenes Mutterngewinde formen und Durchzüge mit Mutterngewinde herstellen können. Dies sind namentlich :

- Pentalobulares, selbstfurchendes Befestigungselement für dünne Bleche
- Pentalobulares, selbstformendes Befestigungselement

Diese Produkte haben eine Grundgewindeform nach DIN 13 und der GewindenennØ entspricht auch dem NennØ "D" der pentalobularen Grundform. Die Gewindeabmaße für Kern- und FlankenØ beziehen sich ebenfalls auf das D-Maß der pentalobularen Querschnittsform. Dies bedeutet auch, dass die ProduktØ "C" und "E" ebenfalls für Flanken- und KernØ gebildet werden müssen.

Allgemeingültige Funktionen

Gewindetoleranzen nach DIN 13, gültig für den PolygonØ "D"

Unrundheit k = 0,075P

Pentalobulares, selbstfurchendes Befestigungselement für dünne Bleche

Für dieses Produkt mit pentalobularem Querschnitt wird die marktübliche Formspitze angesetzt. Die Gewindenennø sind entsprechend aus der DIN 13 zu entnehmen und mit dem entsprechenden Polygon0 "D" gleichzusetzen. Wegen der Produktgeometrie im Übergangsbereich ( Furchbereich) sowie der pentalobularen Grundform sind diese Produkte nicht lehrenhaltig.

Dadurch ergeben sich für die pentalobularen selbstfurchenden Befestigungselemente für dünne Bleche folgende Geometriemaße:

Alle Maße sind in mm angegeben.

| Gewinde | M4 | M5 | M6 |
|---|---|---|---|
| Gewindenenn0 - D | 4,0 | 5,0 | 6,0 |
| Steigung - P | 0,7 | 0,8 | 1,0 |
| Kernnenn$\varnothing$ - $d_k$ | 3,141 | 4,019 | 4,773 |
| Unrundheit - k | 0,053 | 0,060 | 0,075 |
| Hüllkreis$\varnothing$ - C | 4,05 | 5,06 | 6,08 |
| Innenkreis$\varnothing$ - E | 3,95 | 4,94 | 5,92 |

Weitere Gewindeabmessungen mit dieser Querschnittsform, sind ebenfalls herstellbar.

Pentalobulares, selbstformendes Befestigungselement

Dieses Produkt mit pentalobularem Querschnitt hat eine Gewindeform nach DIN 13. Wegen des Produktübergangs von dem Form- und Furchbereich sowie der pentalobularen Grundform sind diese Produkte nicht lehrenhaltig.

Alle Maße sind in mm angegeben.

| Gewinde | M4 | M5 | M6 |
|---|---|---|---|
| Gewindenenn$\varnothing$ - D | 4,0 | 5,0 | 6,0 |
| Steigung - P | 0,7 | 0,8 | 1,0 |
| Kernnenn$\varnothing$ - $d_k$ | 3,141 | 4,019 | 4,773 |
| Unrundheit - k | 0,053 | 0,060 | 0,075 |
| Hüllkreis0 - C | 4,05 | 5,06 | 6,08 |
| Innenkreis$\varnothing$ - E | 3,95 | 4,94 | 5,92 |

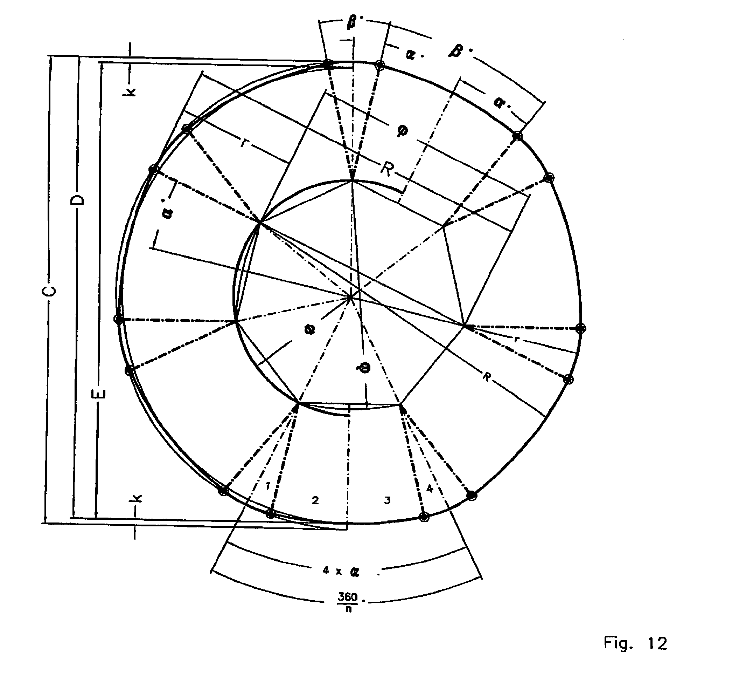

Weitere Gewindeabmessungen mit dieser Querschnittsform, sind ebenfalls herstellbar.
Als Beispiel für eine andere Ausführungsform der vorliegenden Erfindung mit einer höheren Eckzahl (n = 7) zeigt Figur 12 die geometrische Konstruktion und die entsprechende Bemaßung für einen heptalobularen Querschnitt, d.h. einen Kernquerschnitt in Form eines abgerundeten 7-Ecks.
Allgemein gelten erfindungsgemäß die folgenden Formeln zur Berechnung beliebiger N-lobularer Querschnitte, wobei n die Anzahl der abgerundeten Polygonecken und k die Funktion der Gewindesteigung angibt:

$$\alpha = \frac{360°}{n*4} \qquad C = D+k$$

$$D = R+r$$

$$\Phi = \frac{1}{(2*(1-\cos\alpha))} * k$$

$$\varphi = \frac{\cos\alpha}{(1-\cos\alpha)} *k$$

$$R = \tfrac{1}{2}*C + \left( \frac{1}{(2*(1-\cos\alpha))} - 1 \right) *k$$

$$r = \tfrac{1}{2}*C - \frac{1}{(2*(1-\cos\alpha))} * k$$

## Patentansprüche

1.  Selbstfurchende Schraube (10) mit einem Kopf (12) und einem Außengewindeträger (14), bei der der Kernquerschnitt des Außengewindeträgers (14) die Form eines abgerundeten n-Ecks aufweist, wobei n eine Primzahl >3 ist, **dadurch gekennzeichnet, dass** die Form des abgerundeten n-Ecks aus 2n Bogenabschnitten (26, 28) mit abwechselnd einem großen Radius R und einem kleinen Radius r gebildet ist, wobei diese n-Mittelpunkte (30) der Radien R, r auf einem Hilfskreis, der koaxial innerhalb des Kernquerschnitts angeordnet ist, liegen, der einen Radius φ aufweist, und wobei jeder Mittelpunkt (30) dem nächstgelegenen Bogenabschnitt (26) mit kleinem Radius r und dem über dem Mittelpunkt (30) auf dem Hilfskreis gegenüberliegenden Bogenabschnitt (28) mit großem Radius R zugeordnet ist.

2.  Selbstfurchende Schraube (10) nach Anspruch 1, **dadurch gekennzeichnet, dass** die Abmaße des Kernquerschnittes des Außengewindeträgers (14) folgendermaßen bestimmt sind, wobei k die materialabhängig gewünschte Unrundheit des Gewindequerschnitts, C der Hüllkreisdurchmesser, D der Gewindenenndurchmesser ist:

$$\alpha = \frac{360°}{n*4} \qquad\qquad C = D + k$$

$$D = R + r$$

$$\Phi = R - r$$

$$\Phi = \frac{1}{(2*(1-\cos\alpha))} * k$$

$$\varphi = \frac{\cos\alpha}{(1-\cos\alpha)} * k$$

$$R = \tfrac{1}{2}*C + \left(\frac{1}{(2*(1-\cos\alpha))} - 1\right)*k$$

$$r = \tfrac{1}{2}*C - \left(\frac{1}{(2*(1-\cos\alpha))} - 1\right)*k$$

## Claims

1.  Self-tapping screw (10) having a head (12) and an outer thread carrier (14), wherein the core cross section of the outer thread carrier (14) has a shape of a rounded n-angle, wherein n is a primary number >3, **characterized in that** the shape of the rounded n-angle is formed from 2n-arc portions (26, 28) with alternating large radius R and small radius r, wherein these n-center points (30) of the radia R, r are positioned on an auxiliary circle which is arranged coaxially within the core cross section, having a radius φ, and wherein each center point (30) is associated to the next adjacent arc portion (26) having the small radius r and to the arc portion (28) having the large radius R located opposite thereto across the center point (30) on the auxiliary circle.

2. Self-tapping screw (10) according to claim 1, **characterized in that** the measures of the core cross section of the outer thread carrier (14) are determined as follows, wherein k is the non-roundness of the thread cross section required dependent on the material, C is the enveloping circle diameter, D is the nominal thread diameter:

$$\alpha = \frac{360°}{n*4} \qquad C = D + k$$

$$D = R + r$$

$$\Phi = R - r$$

$$\Phi = \frac{1}{(2*(1-\cos\alpha))} * k$$

$$\varphi = \frac{\cos\alpha}{(1-\cos\alpha)} * k$$

$$R = \tfrac{1}{2} * C + (\frac{1}{(2*(1-\cos\alpha))} - 1) * k$$

$$r = \tfrac{1}{2} * C - (\frac{1}{(2*(1-\cos\alpha))} - 1) * k$$

**Revendications**

1. Vis autotaraudeuse (10) avec une tête (12) et un support de filetage externe (14), la section transversale de l'âme du support de filetage externe (14) ayant la forme d'un n-gone arrondi, n étant un nombre premier >3, **caractérisée en ce que** la forme du n-gone arrondi est constituée de 2n sections en arc (26, 28) avec en alternance un grand rayon R et un petit rayon r, les n centres (30) des rayons R, r faisant partie d'un cercle auxiliaire arrangé coaxialement dans la section transversale de l'âme qui a un rayon Φ et chaque centre (30) étant associé à la section en arc (26) la plus proche avec un petit rayon r et à la section en arc (28) avec un grand rayon R au-dessus du centre (30) opposé sur le cercle auxiliaire.

2. Vis autotaraudeuse (10) selon la revendication 1, **caractérisée en ce que** les dimensions de la section transversale de l'âme du support de filetage externe (14) sont calculées de la manière suivante, k étant la non-circularité désirée dépendant du matériau, C étant le diamètre du cercle enveloppant et D étant le diamètre nominal du filetage:

$$\alpha = \frac{360°}{n*4} \qquad C = D + k$$

$$D = R + r$$

$$\Phi = \frac{1}{(2*(1-\cos\alpha))} * k \qquad \Phi = R - r$$

$$\varphi = \frac{\cos\alpha}{(1-\cos\alpha)} * k$$

$$R = \frac{1}{2} * C + \left(\frac{1}{(2*(1-\cos\alpha))} - 1\right) * k$$

$$r = \frac{1}{2} * C - \left(\frac{1}{(2*(1-\cos\alpha))} - 1\right) * k$$

Fig. 1

Fig. 2

Einzelheit " z " *Fig.3*

*Fig.4*

Fig. 5

Fig. 6

Fünfkantlänge

s = $\overline{AF}$

A

E

B

R'

M

F

54°

72°

54°

D

C

Fig. 7

EP 2 906 837 B1

Fig. 8

Axialkraft 35KN
$F_{R1}$ = 12.739KN
$F_1$ = 37.246KN

Axialkraft 35KN
$F_{R2}$ = 6.297KN
$F_2$ = 35.56 KN

$F_1 = F_{A1} / \cos \alpha$

$F_2 = F_{A2} / \cos \alpha$

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2292939 A2